# EUROPÄISCHE PATENTSCHRIFT

(11) **EP 3 765 274 B1**
(45) Veröffentlichungstag und Bekanntmachung des Hinweises auf die Patenterteilung: **19.02.2025**
(21) Anmeldenummer: 19711299.8
(22) Anmeldetag: 12.03.2019
(51) Int. Cl.: B29C 65/10, B29C 65/60

(54) **VERFAHREN UND SYSTEM MIT EINER VORRICHTUNG ZUM ERHITZEN EINES VERBINDUNGSELEMENTES**
METHOD AND SYSTEM WITH A DEVICE FOR HEATING A CONNECTION ELEMENT
PROCÉDÉ ET SYSTÈME AVEC UN DISPOSITIF POUR CHAUFFER UN ÉLÉMENT DE CONNEXION

(30) Priorität: 15.03.2018 DE 102018002084
(43) Veröffentlichungstag der Anmeldung: 20.01.2021
(73) Patentinhaber: bdtronic GmbH, 97990 Weikersheim (DE)
(72) Erfinder: HERRMANN, Christian, 97980 Bad Mergentheim-Stuppach (DE); GACHSTETTER, Alexander, 97258 Oberickelsheim (DE); LEIMIG, Ina, 97255 Gelchsheim (DE); KRAFT, Thomas, 66916 Breitenbach (DE)
(74) Vertreter: Ellberg, Nils
(86) Internationale Anmeldenummer: PCT/EP2019/056179
(87) Internationale Veröffentlichungsnummer: WO 2019/175187

(56) Entgegenhaltungen:
- DE-A1- 102013 000 018
- DE-A1- 102016 006 097

## Beschreibung

Die Erfindung betrifft ein System gemäß dem Oberbegriff des Anspruchs 1. Des Weiteren betrifft die Erfindung ein Verfahren zum Erhitzen eines Verbindungselementes gemäß dem Oberbegriff des Anspruchs 9.

Um zwei Teile miteinander zu verbinden, ist es bekannt, diese miteinander zu vernieten. Dabei wird beispielsweise ein erstes Teil mit einem zweiten Teil, bzw. einem Fügepartner, in Kontakt gebracht und sodann durch ein Verbindungsmittel, bzw. durch eine Niet oder einen Pin, fest miteinander verbunden.

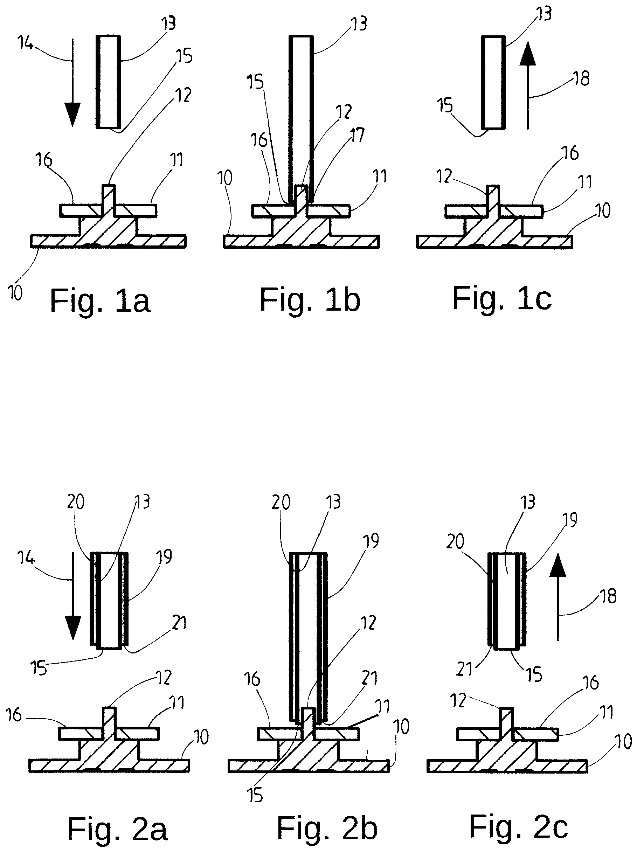

Beim thermischen Nieten von Teilen aus Kunststoff wird ein heißes Medium, wie beispielswiese Heißluft, verwendet, um das Verbindungselement aus Kunststoff zu erhitzen und verformbar zu machen, sodass ein Formstempel das Verbindungselement zur Verbindung der beiden Teile verformen kann. Die DE 10 2016 006 097 A1 zeigt in Fig. 1 einen solchen Stempel 6 mit einem inneren Pressteil 7 und einem äußeren Formteil 8. Zur Beaufschlagung des Verbindungselementes mit dem heißen Medium dient eine Düse (Fig. 2). Diese Düse ist beispielsweise rohrartig ausgebildet und derart dimensioniert, dass sie mit einem Endbereich wenigstens teilweise über das Verbindungselement führbar ist.

Bei diesem Verfahren lässt es sich schwerlich vermeiden, nur das zu verformende Verbindungselement mit Wärmeenergie zu beaufschlagen. So wird neben dem Verbindungselement auch das darunter liegende Teil, insbesondere der Fügepartner, aber auch die Vorrichtung zum Erhitzen der thermischen Energie ausgesetzt. Dies kann insbesondere dazu führen, dass der Fügepartner sich ungewollt und vor allen Dingen unkontrolliert verformt. Darüber hinaus werden auch sämtliche Bauteile, die mit den zu verbindenden Teilen in Kontakt stehen, erhitzt. Insbesondere empfindliche Bauteile wie elektrische Schaltkreise können durch hohe Hitze irreversiblen Schaden nehmen. Ein weiterer Nachteil des vorbeschriebenen Verfahrens besteht darin, dass ein Großteil der thermischen Energie ungenutzt an die Umgebung abgegeben wird.

In der DE 10 2013 000 018 A1 ist eine Vorrichtung gezeigt, bei der Stempel und Düse in einer gemeinsamen Vorrichtung miteinander kombiniert sind. Dies führt zu einem komplexen Aufbau der Vorrichtung.

Davon ausgehend liegt der Erfindung die Aufgabe zugrunde, ein System und ein Verfahren zu schaffen, bei denen die genannten Nachteile beseitigt sind.

Ein System zur Lösung dieser Aufgabe weist die Merkmale des Anspruchs 1 auf. Demnach ist es vorgesehen, dass um die Düse eine vorzugsweise wenigstens teilweise rohrartige Hülse angeordnet ist und zwischen einer Außenwandung der Düse und einer Innenwandung der Hülse ein wenigstens nahezu ringartiger Kanal ausgebildet ist. Dabei kann die Düse insbesondere axial in der Hülse angeordnet sein. Der ringartige Kanal weist zumindest weitestgehend einen gleichen Abstand zwischen der Außenwandung der Düse und der Innenwandung der Hülse auf. Es kann jedoch auch vorgesehen sein, dass der Abstand zwischen der Außenwandung und der Innenwandung variiert. Gleichermaßen kann es erfindungsgemäß vorgesehen sein, dass ein Querschnitt der Düse und/oder ein Querschnitt der Hülse von einer kreisförmigen Gestalt abweicht, nämlich vielmehr oval ist oder eine beliebige Gestalt aufweist. Ferner ist vorgesehen, dass das heiße Medium durch die Düse dem Verbindungselement zuführbar ist, wobei ein Endbereich der Düse das Verbindungselement wenigstens teilweise umschließt, und dass das Medium durch einen Spalt zwischen der Stirnseite der Düse und einer Oberfläche des zweiten Teils aus der Düse abführbar ist und durch den Kanal wegführbar ist. Vorzugsweise erfolgt dies entweder aktiv oder passiv.

Eine Weiterentwicklung der vorliegenden Erfindung kann es vorsehen, dass eine offene, einen Auslass bildende Stirnseite der Düse und eine offene, einen Einlass bildende Stirnseite der Hülse mit einem Abstand über einer Oberfläche des zweiten Teils angeordnet sind, wobei sich zwischen den Stirnseiten und der Oberfläche des zweiten Teils jeweils ein Spalt ausbildet. Der Abstand der Stirnseiten zu der Oberfläche bzw. die Breite der Spalte kann 0,1 mm, 0,2 mm bzw. 0,5 mm, 1,0 mm, 2,0 mm oder 5,0 mm betragen. Der Abstand der Stirnseiten zu der Oberfläche bzw. die Spaltenbreite kann in Abhängigkeit der zu befördernden Menge des heißen Mediums durch die Düse variieren.

Weiter kann es ein vorteilhaftes Ausführungsbeispiel der vorliegenden Erfindung vorsehen, dass eine offene, einen Auslass bildende Stirnseite der Düse beabstandet über einer Oberfläche des zweiten Teils angeordnet ist, wobei sich ein Spalt zwischen der Stirnseite der Düse und der Oberfläche ausbildet und eine offene, einen Einlass bildende Stirnseite der Hülse, insbesondere schließend, in Kontakt mit der Oberfläche des zweiten Teils steht, wobei eine Innenwandung der Hülse wenigstens zur Oberfläche des zweiten Teils eine geschlossene Kammer um die Düse ausbildet. Der Abstand der Stirnseite der Düse zu der Oberfläche bzw. die Spaltbreite kann dabei die gleiche Dimension annehmen, wie in dem vorherigen Absatz beschrieben. Dadurch, dass die Stirnseite der Hülse in direktem Kontakt mit der Oberfläche des zweiten Teils bzw. des Fügepartners steht, bildet sich um die Düse ein geschlossenes Volumen. Das heiße Medium, was nun durch die Düse dem Verbindungselement zugeführt wird, tritt durch den Spalt zwischen der Stirnseite der Düse und der Oberfläche und wird durch den ringartigen Kanal abgeführt. Dieses Abführen kann entweder passiv erfolgen durch das Abführen der Luft durch den Effekt des Staudrucks oder aktiv durch Absaugen der Luft durch eine Pumpe, insbesondere durch eine Vakuumpumpe.

Während bei dem Ausführungsbeispiel, bei dem sowohl die Stirnseite der Hülse als auch die Stirnseite der Düse von der Oberfläche des zweiten Teils beabstandet sind, durchaus noch ein geringer Teil des heißen Mediums die Vorrichtung verlassen kann und somit Wärmeenergie verloren geht, wird durch das zuletzt genannte Ausführungsbeispiel der Erfindung das heiße Medium der Vorrichtung bzw. Düse zurückgeführt. Dadurch wird zum einen vermieden, dass das zweite Teil bzw. der Fügepartner oder andere empfindliche Bauteile unerwünscht erhitzt werden und zum anderen kann die nicht verwendete thermische Energie des erhitzten Mediums für das Aufheizen des Verbindungselementes wiederverwendet werden. Beispielsweise lässt sich die abgesaugte Luft erneut einer dem Erhitzen des Mediums dienenden Heizvorrichtung zuführen. Durch die Restenergie in dem immer noch warmen Medium bedarf es einer geringeren Energieanstrengung, um das Medium erneut aufzuheizen.

Bevorzugterweise kann es außerdem vorgesehen sein, dass die Stirnseite der Düse aus der Stirnseite der Hülse herausragt oder dass die Stirnseite der Hülse über die Stirnseite der Düse hinausragt. Dadurch lässt sich insbesondere das Beaufschlagen des Verbindungselementes mit Heißluft bzw. das Absaugen der Heißluft effizienter gestalten.

Insbesondere die der Düse vorauseilende Hülse dient dazu einen wenigstens zur Oberfläche des zweiten Teils hin geschlossenen Kanal bzw. Kammer auszubilden. Durch diesen schließenden Kontakt der Hülse mit der Oberfläche des zweiten Teils lässt sich das heiße Medium sehr effizient von dem zweiten Teil wegführen, wodurch ein Erhitzen des zweiten Teils oder anderer Bauteile minimiert bzw. vermieden wird.

Des Weiteren kann es erfindungsgemäß vorgesehen sein, dass die Düse und die Hülse axial gegeneinander verfahrbar sind und/oder die Düse gegen die Hülse bzw. die Hülse gegen die Düse federnd gelagert ist. Dadurch, dass die Hülse relativ zu der Düse verfahrbar ist, kann beispielsweise die Düse zunächst über das Verbindungselement geführt werden und sodann die Hülse axial derart verfahren werden, dass Ihre Stirnseite in Kontakt mit der Oberfläche des zweiten Teils tritt. Für den Fall, dass sich durch den Kanal nicht die gesamte Wärmemenge abführen lässt, könnte die Hülse wenigstens geringfügig von der Oberfläche beabstandet werden, um die heiße Luft entweichen zu lassen. Durch die federnde Lagerung der Hülse können eventuelle Unregelmäßigkeiten oder Unebenheiten auf der Oberfläche des zweiten Teils beim Aufsetzen der Stirnseite der Hülse auf eben diese Oberfläche ausgeglichen werden. Durch die federnde Lagerung der Hülse oder durch eine Federvorspannung der Hülse kann somit trotz eventueller Unregelmäßigkeiten oder Unebenheiten eine wenigstens weitestgehend bündige Verbindung zwischen Hülse und Oberfläche erreicht werden. Auch eventuelle Vibrationen der Vorrichtung oder des zweiten Teils können durch die federnde Lagerung der Hülse ausgeglichen werden.

Des Weiteren kann es erfindungsgemäß vorgesehen sein, dass die Düse und die Hülse eine bauliche Einheit bilden und diese Einheit in Abhängigkeit von einer Größe des Verbindungselementes gegen eine andere Einheit mit einer Düse und einer Hülse, die der Größe des Verbindungselementes entsprechende Innendurchmesser aufweisen, austauschbar ist, wobei die Einheit vorzugsweise ein Schnellwechselsystem aufweist. Die Einheit oder auch Set oder Baugruppe besteht aus der Düse und der Hülse und ist der Vorrichtung zugeordnet. Durch ein derartiges Schnellwechselsystem kann auf eine schnelle und flexible Art und Weise auf sich ändernde Anforderungen bzw. Situationen reagiert werden. Dabei sollte der Innendurchmesser der Düse wenigstens im weitesten Sinne der Dimensionierung des Verbindungselementes entsprechen. Allerdings ist der Innendurchmesser der Düse stets so zu wählen, dass sich zwischen der Innenwandung der Düse und dem Verbindungselement ein ausreichender Zwischenraum ergibt, um die Heißluft abzuführen.

Darüber hinaus kann es erfindungsgemäß vorgesehen sein, dass der Düse und/oder der Hülse mindestens ein Sensormittel zur Aufnahme einer Identifikation bzw. Beschriftung oder eines Barcodes des ersten und/oder zweiten Teils zugeordnet ist, wobei über das mindestens eine Sensormittel vorzugsweise auch die Art und Beschaffenheit des Verbindungselementes feststellbar ist und die Düse entsprechend der Art und Beschaffenheit des Verbindungselementes kalibrierbar ist. Durch dieses Sensormittel bzw. durch die Identifikation der Teile kann der gesamte Prozess des Erhitzens des Verbindungselementes dokumentiert und abgespeichert werden. Dies kann insbesondere für eine Qualitätskontrolle vorteilhaft sein.

Ein Ausführungsbeispiel kann es vorsehen, dass durch eine Steuereinheit sowohl die Temperatur als auch der Volumenstrom der Heißluft geregelt wird. Je nach Größe und Material des Verbindungselementes sowie Dimensionierung der Düse können unterschiedliche Volumenströme und Temperaturen vorteilhaft sein. Auch ist es denkbar, dass während des Erhitzens des Verbindungselementes die Temperatur und der Volumenstrom variieren. Die vorgenannte Steuereinheit kann auch dazu dienen, sowohl die Hülse als auch die Düse an die Oberfläche des zweiten Teils heranzufahren und wieder vom selbigen zu beabstanden. So ist es denkbar, dass die Steuereinheit eine Bilderkennung aufweist, um die Düse gezielt über das Verbindungselement zu führen. Des Weiteren kann die Steuereinheit direkt oder indirekt über eine Identifikationsnummer ermitteln, aus welchem Material das Verbindungselement besteht. In Abhängigkeit von dem Material wird sodann die Heißluftzufuhr eingestellt.

Ein Verfahren zur Lösung der eingangs genannten Aufgabe wird durch die Maßnahmen des Anspruchs 9 beschrieben. Demnach ist es vorgesehen, dass das heiße Medium durch einen Kanal zwischen einer axial um die Düse angeordneten Hülse und der Düse abgeführt wird. Durch dieses Abführen wird zum einen vermieden, dass die Umgebung, insbesondere das zweite Teil bzw. der Fügepartner, zu stark erhitzt wird. Zum anderen kann durch das Abführen des heißen Mediums bzw. der Luft Energie eingespart werden, da die zurückgeführte Luft erneut für die Erhitzung des Verbindungselementes verwendet werden kann.

Außerdem kann es erfindungsgemäß vorgesehen sein, dass eine offene, einen Auslass bildende Stirnseite der Düse und eine offene, einen Einlass bildende Stirnseite der Hülse mit einem Abstand über einer Oberfläche des zweiten Teils positioniert werden, wobei sich zwischen den Stirnseiten und der Oberfläche des zweiten Teils jeweils ein Spalt ausbildet.

Ein weiteres bevorzugtes Ausführungsbeispiel der vorliegenden Erfindung sieht es vor, dass eine offene, einen Auslass bildende Stirnseite der Düse beabstandet über einer Oberfläche des zweiten Teils positioniert wird, wobei sich ein Spalt zwischen der Stirnseite der Düse und der Oberfläche ausbildet und eine offene, einen Einlass bildende Stirnseite der Hülse, insbesondere schließend, in Kontakt mit der Oberfläche des zweiten Teils gebracht wird, wobei die Innenwandung der Hülse wenigstens zur Oberfläche des zweiten Teils eine geschlossene Kammer um die Düse ausbildet.

Außerdem ist es vorgesehen, dass ein Gasfluss bzw. der Fluss des zu erhitzenden Mediums startet, bevor ein Lufterhitzer zum Erhitzen des Mediums gestartet wird. Auf diese Weise wird sowohl das Verbindungselement sowie die Düse sukzessive erhitzt. Dies ist insbesondere für die Düse und die Hülse besonders schonend. Gleichermaßen strömt das Medium noch durch die Düse, wenn der Lufterhitzer bereits abgeschaltet wurde, um die Düse und das Verbindungselement kontrolliert abzukühlen und die verbleibende Wärmeenergie möglichst schnell aus der Vorrichtung abzuführen.

Bevorzugte Ausführungsbeispiele der Erfindung werden nachfolgend anhand der Zeichnung näher erläutert. In dieser zeigt:
- Fig. 1a: Heranführen einer Düse an ein Verbindungselement,
- Fig. 1b: Absenken der Düse über dem Verbindungselement zur Beaufschlagung mit Heißluft,
- Fig. 1c: Wegbewegen der Düse von dem erhitzen Verbindungselement,
- Fig. 2a: ein erstes Ausführungsbeispiel für das Heranführen einer Düse mit einer Hülse an ein Verbindungselement,
- Fig. 2b: Beaufschlagung des Verbindungselementes mit Heißluft durch die Düse,
- Fig. 2c: Wegbewegen der Düse und der Hülse nach Erhitzen des Verbindungselementes,
- Fig. 3a: eine Darstellung eines weiteren Ausführungsbeispiels für ein Heranführen einer Düse mit einer Hülse an ein Verbindungselement,
- Fig. 3b: Beaufschlagung des Verbindungselementes mit Heißluft durch die Düse, und
- Fig. 3c: Wegbewegen der Hülse und der Düse.

Um ein erstes Teil 10 mit einem zweiten Teil 11, auch als Fügepartner bezeichnet, zu verbinden, ist es bekannt, ein Verbindungselement 12, auch als Pin oder Niet bezeichnet, zunächst durch Beaufschlagung eines heißen Mediums bzw. Heißluft zu erhitzen (Fig. 1a, 1b, 1c). Bei diesem den Stand der Technik darstellenden Beispiel ist das Verbindungselement 12 integraler Bestandteil des ersten Teils 10 und durch eine Öffnung in dem zweiten Teil 11 geführt. Dabei wird zunächst eine Düse 13, die im Wesentlichen rohrartig ausgebildet ist, in Pfeilrichtung 14 über das Verbindungselement 12 geführt (Fig. 1a, 1b). Der Übersicht halber ist hier nur ein Teil der stark schematisierten Düse 13 dargestellt. Es versteht sich, dass das Verbindungselement 12 auch der Düse zugeführt werden kann.

Die durch die Düse 13 zu führende Heißluft wird durch einen nicht dargestellten Heißluftgenerator erzeugt. Dabei wird dem Heißluftgenerator zunächst Luft zugeführt und diese sodann auf eine vorzugebende Temperatur erhitzt. Durch ein entsprechendes nicht dargestelltes Gebläse wird die Heißluft beschleunigt durch die Düse 13 direkt auf das Verbindungselement 12 geführt.

Damit die Heißluft an einer Stirnseite 15 der Düse 13 beim Erhitzen des Verbindungselementes 12 entweichen kann und es nicht zu einem Aufstauen der heißen Luft kommt, wird die Düse 13 gerade nur so weit über das Verbindungselement 12 geführt, dass sich zwischen der Stirnseite 15 und einer Oberfläche 16 des zweiten Teils 11 ein Spalt 17 ausbildet. Die durch die Düse 13 strömende Heißluft erhitzt somit das Verbindungselement 12 und verlässt sodann die Düse 13 durch den ringartigen Spalt (Fig. 1b).

Nach einer vorgegebenen Zeit, in der das Verbindungselement 12 ausreichend mit der Heißluft beaufschlagt wurde, wird die Düse 13 wieder in Pfeilrichtung 18 von dem Verbindungselement 12 weggeführt (Fig. 1c), bzw. wird das Verbindungselement 12 von der Düse 13 weggeführt. Im Weiteren wird die Düse 13 derart verfahren, dass sie ein weiteres Verbindungselement 12 mit Heißluft beaufschlagen kann bzw. wird ein weiteres erstes Teil 10 zusammen mit dem entsprechenden zweiten Teil 11 relativ zu der Düse 13 ausgerichtet, damit diese wiederum über das Verbindungselement 12 führbar ist. Als nachteilig gestaltet sich dabei, dass nicht nur das Verbindungselement 12 erhitzt wird, sondern auch die Oberfläche 16 bzw. das zweite Teil 11 oder andere nicht dargestellte empfindliche Bauteile, die mit der Oberfläche in Kontakt stehen. Eine derartige Erhitzung kann zu irreversibler Schädigung führen. Außerdem geht bei dem in den Fig. 1a bis 1c dargestellten Beispiel ein Großteil der Wärmeenergie des Mediums ungenutzt verloren.

Bei dem durch die Fig. 2a bis 2c dargestellten Ausführungsbeispiel der Erfindung ist die in den Fig. 1a bis 1c dargestellte Düse 13 durch eine Hülse 19 ergänzt. Gegenstände der Fig. 2a bis 2c, die identisch zu denen der Fig. 1a bis 1c sind, werden der Übersicht halber mit den gleichen Bezugsziffern benannt.

Genau wie zuvor anhand der Fig. 1a bis 1c beschrieben, wird zum Erhitzen des Verbindungselementes 12 die Düse 13 über das Verbindungselement 12 geführt und zwar derart, dass zwischen der Oberfläche 16 des zweiten Teils 11 und der Stirnseite 15 der Düse 13 ein Spalt 17 verbleibt. Es ist jedoch genauso denkbar, dass das Verbindungselement 12 in die Düse 13 hineingeführt wird. Um die Düse 13 ist nun die Hülse 19 angeordnet, und zwar derart, dass sich zwischen einer Außenwandung der Düse 13 und einer Innenwandung der Hülse 19 ein Kanal 20 ausbildet. Dieser Kanal 20 kann sich ringartig axial um die Düse 13 bzw. innerhalb der Hülse 19 erstrecken. Es kann jedoch auch vorgesehen sein, dass dieser Kanal 20 eine beliebige Form aufweist und von einer ringartigen Gestalt abweicht.

Eine Stirnseite 21 der Hülse 19 ist leicht entgegen der Pfeilrichtung 14 nach hinten versetzt. Dadurch sind die Stirnseite 15 der Düse 13 und die Stirnseite 21 der Hülse 19 voneinander versetzt. Somit ist ein Abstand zwischen der Stirnseite 21 der Hülse 19 und der Oberfläche 16 des zweiten Teils 11 größer als ein Abstand zwischen der Stirnseite 15 der Düse 13 und der Oberfläche 16 des zweiten Teils 11 (Fig. 2b).

Wenn nun das Verbindungselement 12 mit Heißluft beaufschlagt wird, kann die aus der Stirnseite 15 der Düse 13 heraustretende immer noch heiße Luft durch den Kanal 20 zwischen der Düse 13 und der Hülse 19 abgesogen werden. Dieses Absaugen kann aktiv durch eine nicht dargestellte Vakuumpumpe erfolgen, welche z. B. an einer der Stirnseite 21 gegenüberliegenden Seite der Hülse 19 mit selbiger verbunden ist. Außerdem ist es denkbar, dass die Heißluft passiv durch den Effekt des Staudruckes durch den Kanal 20 abgeführt wird. Durch dieses aktive oder passive Abführen der Heißluft kann wenigstens ein Großteil der aus der Düse 13 heraustretenden Heißluft zum einen von der Oberfläche 16 weggeleitet werden und zum anderen dem Heißluftgenerator sowie dem Gebläse zum erneuten Erhitzen des Verbindungselementes 12 wieder zugeführt werden.

Sobald das Verbindungselement 12 ausreichend mit Heißluft beaufschlagt wurde, wird die Einheit bestehend aus Hülse 19 und Düse 13 in Pfeilrichtung 18 von dem Verbindungselement 12 wegbewegt (Fig. 2c).

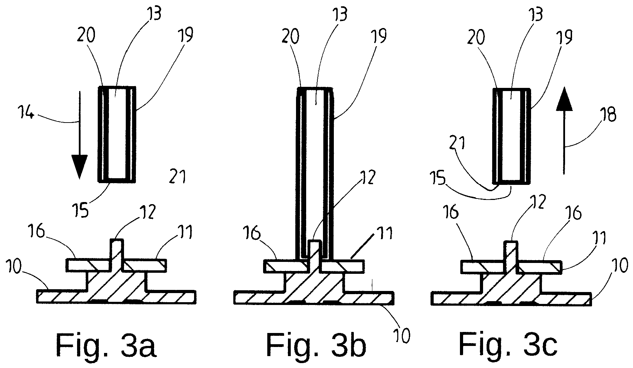

Bei dem in den Fig. 3a bis 3c dargestellten Ausführungsbeispiel der Erfindung besteht ein wesentlicher Unterschied zu dem in den Fig. 2a bis 2c dargestellten Ausführungsbeispiel darin, dass während der Beaufschlagung des Verbindungselementes 12 mit Heißluft die Stirnseite 21 der Hülse 19 in Kontakt mit der Oberfläche 16 des zweiten Teils 11 gebracht ist (Fig. 3b). Ansonsten verhält sich das in den Fig. 3a bis 3c dargestellte Ausführungsbeispiel ähnlich zu dem in den Fig. 2a bis 2c dargestellten Ausführungsbeispiel, weswegen für gleiche Gegenstände gleiche Bezugszeichen verwendet werden.

Dadurch, dass die Hülse 19 mit Ihrer Stirnseite 21 auf der Oberfläche 16 des zweiten Teils 11 aufliegt, wird die gesamte Heißluft, die durch die Stirnseite 15 der Düse 13 in den Kanal 20 tritt, abgesaugt (Fig. 3b). Auf diese Weise kann die gesamte Heißluft für die Erhitzung des Verbindungselementes 12 wiederverwendet werden. Des Weiteren kann durch diese Bildung einer geschlossenen Kammer um die Düse 13 das Verbindungselement 12 erhitzt werden, ohne dass die umliegenden Teile, insbesondere das zweite Teil 11 oder empfindliche Bauteile, einer zu hohen Hitze ausgesetzt werden.

Bei dem in den Fig. 3a bis 3c dargestellten Ausführungsbeispiel kann es vorgesehen sein, dass die Stirnseite 21 der Hülse 19 in Pfeilrichtung 14 versetzt zu der Stirnseite 15 der Düse 13 angeordnet ist. Durch diesen Versatz bildet sich zwischen der Stirnseite 15 der Düse 13 und der Oberfläche 16 ein Spalt 17 aus, während die Stirnseite 21 der Hülse 19 auf der Oberfläche 16 absetzbar ist.

Außerdem kann es vorgesehen sein, dass die Hülse 19 und die Düse 13 axial zueinander verfahrbar sind. Durch die Möglichkeit, die Düse 13 und die Hülse 19 gegeneinander zu verfahren, kann mit der gleichen Einheit sowohl das Ausführungsbeispiel der Fig. 2a bis 2c sowie das Ausführungsbeispiel der Fig. 3a bis 3c realisiert werden. Durch eine eventuelle Federvorspannung zwischen der Hülse 19 und der Düse 13 bewegen sich diese zurück in eine Ausgangslage, sobald eine die relative Bewegung auslösende Kraft abgeschaltet wird. Durch die Federvorspannung oder eine federnde Lagerung der Hülse 19 oder der Düse 13 können eventuelle Unregelmäßigkeiten oder Unebenheiten auf der Oberfläche 16 des zweiten Teils 11 beim Aufsetzen der Stirnseite 21 der Hülse 11 auf die Oberfläche 16 ausgeglichen werden. Durch die federnde Lagerung der Hülse 19 oder durch eine Federvorspannung der Hülse 19 kann somit trotz eventueller Unregelmäßigkeiten oder Unebenheiten eine wenigstens weitestgehend bündige Verbindung zwischen Hülse 19 und Oberfläche 16 erreicht werden. Auch eventuelle Vibrationen der Vorrichtung oder des zweiten Teils 11 können durch die federnde Lagerung der Hülse 19 ausgeglichen werden. Die relative Bewegung kann beispielsweise durch einen nicht dargestellten Antrieb erfolgen, der durch eine ebenfalls nicht dargestellte Steuereinheit derart betrieben wird, dass beim Herabführen der Einheit bestehend aus der Düse 13 und der Hülse 19 die Hülse 19 über die Düse 13 hinweg geführt wird. Durch diese Steuereinheit kann ebenfalls kontrolliert werden, ob nach der Beaufschlagung des Verbindungselementes 12 mit Heißluft die Hülse 19 bzw. die Düse 13 wieder in eine Ausgangslage zurückbewegt wurde.

### Bezugszeichenliste

- 10: erstes Teil
- 11: zweites Teil
- 12: Verbindungselement
- 13: Düse
- 14: Pfeilrichtung
- 15: Stirnseite
- 16: Oberfläche
- 17: Spalt
- 18: Pfeilrichtung
- 19: Hülse
- 20: Kanal
- 21: Stirnseite

## Patentansprüche

1. System mit einer Vorrichtung zum Erhitzen eines Verbindungselementes (12), insbesondere eines Pins oder eines Niets, und mit einem ersten Teil (10) und mit einem zweiten Teil (11), wobei die Vorrichtung eine Düse (13) aufweist, und wobei das Verbindungselement (12) durch die Düse (13) mit einem heißen Medium, vorzugsweise heißer Luft, beaufschlagbar ist und wobei das Verbindungselement (12) dem ersten Teil (10) zugeordnet ist und der Verbindung des ersten Teils (10) mit dem zweiten Teil (11), insbesondere einem Fügepartner, dient, und wobei um die Düse (13) eine rohrartige Hülse (19) angeordnet ist und zwischen einer Außenwandung der Düse (13) und einer Innenwandung der Hülse (19) ein wenigstens nahezu ringartiger Kanal (20) ausgebildet ist, und wobei das heiße Medium durch die Düse (13) dem Verbindungselement (12) zuführbar ist, und wobei das Medium durch einen Spalt (17) zwischen einer Stirnseite (15) der Düse (13) und einer Oberfläche (16) des zweiten Teils (11) aus der Düse (13) abführbar ist und durch den Kanal (20) wegführbar, vorzugsweise aktiv oder passiv absaugbar, ist, **dadurch gekennzeichnet, dass** ein Endbereich der Düse (13) das Verbindungselement (12) wenigstens teilweise umschließt.

2. System nach Anspruch 1, **dadurch gekennzeichnet, dass** eine offene, einen Auslass bildende Stirnseite (15) der Düse (13) und eine offene, einen Einlass bildende Stirnseite (21) der Hülse (19) mit einem Abstand über einer Oberfläche (16) des zweiten Teils (11) angeordnet sind, wobei sich zwischen den Stirnseiten (15, 21) und der Oberfläche (16) des zweiten Teils (11) jeweils ein Spalt (17) ausbildet.

3. System nach Anspruch 1, **dadurch gekennzeichnet, dass** eine offene, einen Auslass bildende Stirnseite (15) der Düse (13) beabstandet über einer Oberfläche (16) des zweiten Teils (11) angeordnet ist, wobei sich ein Spalt (17) zwischen der Stirnseite (15) der Düse (13) und der Oberfläche (16) ausbildet und eine offene, einen Einlass bildende Stirnseite (21) der Hülse (19), insbesondere schließend, in Kontakt mit der Oberfläche (16) des zweiten Teils (11) steht, wobei eine Innenwandung der Hülse (19) wenigstens zur Oberfläche (16) des zweiten Teils (11) eine geschlossene Kammer um die Düse (13) ausbildet.

4. System nach einem der vorherigen Ansprüche, **dadurch gekennzeichnet, dass** die Stirnseite (15) der Düse (13) aus der Stirnseite (21) der Hülse (19) herausragt oder dass die Stirnseite (21) der Hülse (19) über die Stirnseite (15) der Düse (13) hinausragt.

5. System nach einem der vorherigen Ansprüche, **dadurch gekennzeichnet, dass** die Düse (13) und die Hülse (19) axial gegeneinander verfahrbar sind und/oder die Düse (13) gegen die Hülse (19) federnd gelagert ist.

6. System nach einem der vorherigen Ansprüche, **dadurch gekennzeichnet, dass** die Düse (13) und die Hülse (19) eine bauliche Einheit bilden und diese Einheit in Abhängigkeit von einer Größe des Verbindungselementes (12) gegen eine andere Einheit mit einer Düse (13) und einer Hülse (19), die der Größe des Verbindungselementes (12) entsprechende Innendurchmesser aufweisen, austauschbar ist, wobei die Einheit vorzugsweise ein Schnellwechselsystem aufweist.

7. System nach einem der vorherigen Ansprüche, **dadurch gekennzeichnet, dass** der Düse (13) und/oder der Hülse (19) mindestens ein Sensormittel zur Aufnahme einer Identifikation bzw. Beschriftung des ersten und/oder zweiten Teils (11) zugeordnet ist, wobei über das mindestens eine Sensormittel vorzugsweise auch die Art und Beschaffenheit des Verbindungselements (12) feststellbar ist.

8. System nach einem der vorherigen Ansprüche, **dadurch gekennzeichnet, dass** das erhitzte Verbindungselement (12) in einer weiteren Vorrichtung zum Vernieten der Teile (10, 11) durch einen Formstempel verformbar ist, wobei die Vorrichtung zum Erhitzen räumlich von der Vorrichtung zum Vernieten getrennt ist.

9. Verfahren zum kontaktlosen Erhitzen eines Verbindungselementes (12), insbesondere eines Pins oder eines Niets, durch eine rohrartige Düse (13), wobei das Verbindungselement (12) mit einem heißen Medium, vorzugsweise heißer Luft, beaufschlagt wird und wobei das Verbindungselement (12) einem ersten Teil (10) zugeordnet ist und der Verbindung des ersten Teils (10) mit einem zweiten Teil (11), insbesondere einem Fügepartner, dient, und wobei das heiße Medium durch die Düse (13) dem Verbindungselement (12) zugeführt wird, und wobei das Medium durch einen Spalt (17) zwischen einer Stirnseite (15) der Düse (13) und einer Oberfläche (16) des zweiten Teils (11) aus der Düse (13) abgeführt wird und durch einen Kanal (20) zwischen einer axial um die Düse (13) angeordneten Hülse (19) und der Düse (13) abgeführt wird, vorzugsweise aktiv oder passiv abgesaugt wird, **dadurch gekennzeichnet, dass** während das heiße Medium durch die Düse (13) dem Verbindungselement (12) zugeführt wird ein Endbereich der Düse (13) das Verbindungselement (12) wenigstens teilweise umschließend angeordnet ist.

10. Verfahren nach Anspruch 9, **dadurch gekennzeichnet, dass** eine offene, einen Auslass bildende Stirnseite (15) der Düse (13) und eine offene, einen Einlass bildende Stirnseite (21) der Hülse (19) mit einem Abstand über einer Oberfläche (16) des zweiten Teils (11) positioniert werden, wobei sich zwischen den Stirnseiten (15, 17) und der Oberfläche (16) des zweiten Teils (11) jeweils ein Spalt ausbildet.

11. Verfahren nach Anspruch 9, **dadurch gekennzeichnet, dass** eine offene, einen Auslass bildende Stirnseite (15) der Düse (13) beabstandet über einer Oberfläche (15) des zweiten Teils (11) positioniert wird, wobei sich ein Spalt (17) zwischen der Stirnseite (15) der Düse (13) und der Oberfläche (16) ausbildet und eine offene, einen Einlass bildende Stirnseite (21) der Hülse (19), insbesondere schließend, in Kontakt mit der Oberfläche (15) des zweiten Teils (11) gebracht wird, wobei die Innenwandung der Hülse (19) wenigstens zur Oberfläche (15) des zweiten Teils (11) eine geschlossene Kammer um die Düse (13) ausbildet.

12. Verfahren nach einem der Ansprüche 9 bis 11, **dadurch gekennzeichnet, dass** das erhitzte Verbindungselement (12) in einer weiteren Vorrichtung zum Vernieten der Teile (10, 11) durch einen Formstempel verformt wird, wobei das Verbindungselement (12) zu der Vorrichtung zum Vernieten transportiert wird oder die Vorrichtung zum Vernieten dem Verbindungselement (12) zugeführt wird.

## Claims

1. System having a device for heating a connecting element (12), in particular a pin or a rivet, and having a first part (10) and having a second part (11); wherein the device has a nozzle (13); and wherein the connecting element (12) is able to be impinged with a hot medium, preferably hot air, by the nozzle (13); and wherein the connecting element (12) is assigned to the first part (10) and serves for connecting the first part (10) to the second part (11), in particular a mating part; and wherein a tubular sleeve (19) is disposed about the nozzle (13), and an at least almost annular duct (20) is formed between an external wall of the nozzle (13) and an internal wall of the sleeve (19); and wherein the hot medium is able to be supplied to the connecting element (12) through the nozzle (13); and wherein the medium is able to be discharged from the nozzle (13) through a gap (17) between an end side (15) of the nozzle (13) and a surface (16) of the second part (11), and is able to be conveyed away, preferably able to be actively or passively suctioned, through the duct (20), **characterized in that** an end region of the nozzle (13) at least partially encloses the connecting element (12).

2. System according to Claim 1, **characterized in that** an open end side (15) of the nozzle (13), which open end side forms an outlet, and an open end side (21) of the sleeve (19), which open end side forms an inlet, are disposed at a spacing above a surface (16) of the second part (11), wherein a gap (17) is in each case formed between the end sides (15, 21) and the surface (16) of the second part (11).

3. System according to Claim 1, **characterized in that** an open end side (15) of the nozzle (13), which open end side forms an outlet, is disposed at a spacing above a surface (16) of the second part (11), wherein a gap (17) is formed between the end side (15) of the nozzle (13) and the surface (16), and an open end side (21) of the sleeve (19), which open end side forms an inlet, is in contact, in particular closing contact, with the surface (16) of the second part (11), wherein an internal wall of the sleeve (19) forms a closed chamber about the nozzle (13) at least in relation to the surface (16) of the second part (11).

4. System according to one of the preceding claims, **characterized in that** the end side (15) of the nozzle (13) protrudes from the end side (21) of the sleeve (19), or **in that** the end side (21) of the sleeve (19) protrudes beyond the end side (15) of the nozzle (13).

5. System according to one of the preceding claims, **characterized in that** the nozzle (13) and the sleeve (19) are displaceable axially relative to one another, and/or the nozzle (13) is mounted resiliently in relation to the sleeve (19).

6. System according to one of the preceding claims, **characterized in that** the nozzle (13) and the sleeve (19) form a structural unit and this unit, as a function of a size of the connecting element (12), is interchangeable with another unit having a nozzle (13) and a sleeve (19) which have internal diameters corresponding to the size of the connecting element (12), wherein the unit preferably has a quick-release attachment system.

7. System according to one of the preceding claims, **characterized in that** the nozzle (13) and/or the sleeve (19) are/is assigned at least one sensor means for recording an identification or labelling of the first and/or of the second part (11), wherein the type and the configuration of the connecting element (12) are preferably also able to be established by way of the at least one sensor means.

8. System according to one of the preceding claims, **characterized in that** the heated connecting element (12) is able to be deformed by a form punch in a further device for riveting the parts (10, 11), wherein the device for heating is in spatial terms separated from the device for riveting.

9. Method for contactlessly heating a connecting element (12), in particular a pin or a rivet, by a tubular nozzle (13), wherein the connecting element (12) is impinged with a hot medium, preferably hot air; and wherein the connecting element (12) is assigned to a first part (10) and serves for connecting the first part (10) to a second part (11), in particular a mating part; and wherein the hot medium is supplied to the connecting element (12) through the nozzle (13); and wherein the medium is discharged from the nozzle (13) through a gap (17) between an end side (15) of the nozzle (13) and a surface (16) of the second part (11), and is discharged, preferably actively or passively suctioned, through a duct (20) between a sleeve (19) disposed axially about the nozzle (13) and the nozzle (13), **characterized in that,** while the hot medium is being supplied to the connecting element (12) through the nozzle (13), an end region of the nozzle (13) is disposed so as to at least partially enclose the connecting element (12).

10. Method according to Claim 9, **characterized in that** an open end side (15) of the nozzle (13), which open end side forms an outlet, and an open end side (21) of the sleeve (19), which open end side forms an inlet, are positioned at a spacing above a surface (16) of the second part (11), wherein a gap is in each case formed between the end sides (15, 17) and the surface (16) of the second part (11).

11. Method according to Claim 9, **characterized in that** an open end side (15) of the nozzle (13), which open end side forms an outlet, is positioned at a spacing above a surface (15) of the second part (11), wherein a gap (17) is formed between the end side (15) of the nozzle (13) and the surface (16), and an open end side (21) of the sleeve (19), which open end side forms an inlet, is brought into contact, in particular closing contact, with the surface (15) of the second part (11), wherein the internal wall of the sleeve (19) forms a closed chamber about the nozzle (13) at least in relation to the surface (15) of the second part (11).

12. Method according to one of Claims 9 to 11, **characterized in that** the heated connecting element (12) is deformed by a form punch in a further device for riveting the parts (10, 11), wherein the connecting element (12) is transported to the device for riveting, or the device for riveting is supplied to the connecting element (12).

## Revendications

1. Système avec un dispositif pour chauffer un élément de liaison (12), notamment une broche ou un rivet, et avec une première partie (10) et avec une deuxième partie (11), le dispositif présentant une buse (13), et l'élément de liaison (12) pouvant être alimenté par la buse (13) avec un milieu chaud, de préférence de l'air chaud, et l'élément de liaison (12) étant associé à la première partie (10) et servant à la liaison de la première partie (10) avec la deuxième partie (11), notamment un partenaire d'assemblage, et un manchon (19) de type tubulaire étant agencé autour de la buse (13) et un canal (20) au moins presque annulaire étant réalisé entre une paroi extérieure de la buse (13) et une paroi intérieure du manchon (19), et le milieu chaud pouvant être amené à l'élément de liaison (12) par la buse (13), et le milieu pouvant être déchargé de la buse (13) par un espace (17) entre un côté frontal (15) de la buse (13) et une surface (16) de la deuxième partie (11) et pouvant être évacué par le canal (20), de préférence pouvant être aspiré activement ou passivement, **caractérisé en ce qu'**une zone d'extrémité de la buse (13) entoure au moins partiellement l'élément de liaison (12).

2. Système selon la revendication 1, **caractérisé en ce qu'**un côté frontal ouvert (15) de la buse (13), formant une sortie, et un côté frontal ouvert (21) du manchon (19), formant une entrée, sont agencés à une distance au-dessus d'une surface (16) de la deuxième partie (11), un espace (17) se réalisant respectivement entre les côtés frontaux (15, 21) et la surface (16) de la deuxième partie (11).

3. Système selon la revendication 1, **caractérisé en ce qu'**un côté frontal ouvert (15) de la buse (13) formant une sortie est agencé à distance au-dessus d'une surface (16) de la deuxième partie (11), un espace (17) se réalisant entre le côté frontal (15) de la buse (13) et la surface (16), et un côté frontal ouvert (21) du manchon (19) formant une entrée étant en contact, notamment de manière fermante, avec la surface (16) de la deuxième partie (11), une paroi intérieure du manchon (19) réalisant une chambre fermée autour de la buse (13) au moins vers la surface (16) de la deuxième partie (11).

4. Système selon l'une quelconque des revendications précédentes, **caractérisé en ce que** le côté frontal (15) de la buse (13) dépasse du côté frontal (21) du manchon (19) ou **en ce que** le côté frontal (21) du manchon (19) dépasse du côté frontal (15) de la buse (13).

5. Système selon l'une quelconque des revendications précédentes, **caractérisé en ce que** la buse (13) et le manchon (19) sont déplaçables axialement l'un par rapport à l'autre et/ou la buse (13) est montée à ressort contre le manchon (19).

6. Système selon l'une quelconque des revendications précédentes, **caractérisé en ce que** la buse (13) et le manchon (19) forment une unité structurelle et cette unité peut être remplacée, en fonction d'une taille de l'élément de liaison (12), par une autre unité avec une buse (13) et un manchon (19) ayant des diamètres intérieurs correspondant à la taille de l'élément de liaison (12), l'unité présentant de préférence un système de changement rapide.

7. Système selon l'une quelconque des revendications précédentes, **caractérisé en ce qu'**au moins un moyen de détection est associé à la buse (13) et/ou au manchon (19) pour recevoir une identification ou une inscription de la première et/ou de la deuxième partie (11), l'au moins un moyen de détection permettant de préférence de déterminer également le type et la nature de l'élément de liaison (12).

8. Système selon l'une quelconque des revendications précédentes, **caractérisé en ce que** l'élément de liaison (12) chauffé est déformable par un poinçon de formage dans un autre dispositif pour le rivetage des parties (10, 11), le dispositif de chauffage étant séparé dans l'espace du dispositif de rivetage.

9. Procédé de chauffage sans contact d'un élément de liaison (12), notamment d'une broche ou d'un rivet, par une buse (13) de type tubulaire, l'élément de liaison (12) étant alimenté avec un milieu chaud, de préférence de l'air chaud, et l'élément de liaison (12) étant associé à une première partie (10) et servant à la liaison de la première partie (10) à une deuxième partie (11), notamment un partenaire d'assemblage, et le milieu chaud étant amené à l'élément de liaison (12) par la buse (13), et le milieu étant déchargé de la buse (13) par un espace (17) entre un côté frontal (15) de la buse (13) et une surface (16) de la deuxième partie (11) et étant évacué par un canal (20) entre un manchon (19) agencé axialement autour de la buse (13) et la buse (13), de préférence étant aspiré activement ou passivement, **caractérisé en ce que,** pendant que le milieu chaud est amené à l'élément de liaison (12) par la buse (13), une zone d'extrémité de la buse (13) est agencée de manière à entourer au moins partiellement l'élément de liaison (12).

10. Procédé selon la revendication 9, **caractérisé en ce qu'**un côté frontal ouvert (15) de la buse (13), formant une sortie, et un côté frontal ouvert (21) du manchon (19), formant une entrée, sont positionnés à une distance au-dessus d'une surface (16) de la deuxième partie (11), un espace se réalisant respectivement entre les côtés frontaux (15, 17) et la surface (16) de la deuxième partie (11).

11. Procédé selon la revendication 9, **caractérisé en ce qu'** un côté frontal ouvert (15) de la buse (13) formant une sortie est positionné à distance au-dessus d'une surface (15) de la deuxième partie (11), un espace (17) se réalisant entre le côté frontal (15) de la buse (13) et la surface (16), et un côté frontal ouvert (21) du manchon (19) formant une entrée étant mise en contact, notamment de manière fermante, avec la surface (15) de la deuxième partie (11), la paroi intérieure du manchon (19) réalisant une chambre fermée autour de la buse (13) au moins vers la surface (15) de la deuxième partie (11).

12. Procédé selon l'une quelconque des revendications 9 à 11, **caractérisé en ce que** l'élément de liaison (12) chauffé est déformé par un poinçon de formage dans un autre dispositif pour le rivetage des parties (10, 11), l'élément de liaison (12) étant transporté vers le dispositif de rivetage ou le dispositif de rivetage étant amené à l'élément de liaison (12).
